# EUROPÄISCHE PATENTSCHRIFT

(11) **EP 3 052 710 B1**
(45) Veröffentlichungstag und Bekanntmachung des Hinweises auf die Patenterteilung: **08.11.2017**
(21) Anmeldenummer: 13773170.9
(22) Anmeldetag: 30.09.2013
(51) Int. Cl.: A47K 3/28, E03D 9/08, E03D 1/26, E03D 11/02, E03D 11/13, E03D 11/14, F16B 21/18

(54) **MONTAGEPLATTE FÜR EINEN KLOSETTKÖRPER**
MOUNTING PLATE FOR A LAVATORY BODY
PLAQUE DE MONTAGE POUR CORPS DE WC

(43) Veröffentlichungstag der Anmeldung: 10.08.2016
(73) Patentinhaber: Presano AG, 9444 Diepoldsau (CH)
(72) Erfinder: FREI, Christian, CH-9463 Oberriet (CH); GRABER, Daniel, CH-9463 Oberriet (CH); TREMP, Marcel, CH-9042 Speicher (CH)
(74) Vertreter: Lusuardi, Werther
(86) Internationale Anmeldenummer: PCT/CH2013/000174
(87) Internationale Veröffentlichungsnummer: WO 2015/042726

(56) Entgegenhaltungen:
- EP-A1- 1 317 586
- EP-A1- 2 450 492
- WO-A1-2012/051729
- CN-U- 202 426 438
- DE-U1- 9 410 205
- DE-U1- 29 605 731
- FR-A1- 2 228 905
- JP-A- 2013 096 215
- US-A- 5 724 773

## Beschreibung

Die Erfindung bezieht sich auf eine Montageplatte für einen Klosettkörper, auf einen Klosettkörper welcher zur Montage an die Montageplatte geeignet ist, auf eine sanitäre Vorrichtung auf ein Kit umfassend eine Montageplatte und einen Klosettkörper, auf ein Verfahren zur Montage der sanitären Vorrichtung, auf ein Verfahren zur Entfernung eines Klosettkörpers von der Montageplatte, und auf eine Verwendung der Montageplatte zur Befestigung eines Klosettkörpers an einer Gebäudewand. Aus der EP-A 1 317 586 GEBERIT ist ein Dusch-WC bekannt, dessen Funktionselemente, wie z.B. die Unterdusche und ein Boiler in einem Hohlraum im Klosettkörper montiert sind. Ebenfalls am Klosettkörper montiert sind elektronische Steuerorgane zur Steuerung der Funktionselemente. Die an einem bauseitig vorhandenen Traggestell befestigten Spülwasserzufuhr- und Ablaufrohre und die Befestigungselemente für den Klosettkörper bilden eine definierte Schnittstelle, an welcher das Dusch-WC montiert wird. Die für das Dusch-WC notwendigen zusätzlichen Wasser- und Stromanschlüsse sind an vordefinierten Positionen für den Anschluss bereitgestellt. Bei der Montage des Klosettkörpers besteht allerdings die Gefahr, dass die Wasser- und Stromleitungen gequetscht oder eingeklemmt werden, oder es besteht der Nachteil, dass der Anschluss der Wasser- und Stromleitungen an die im Klosettkörper integrierten Funktionselemente sehr umständlich oder mit Risiken verbunden ist. Dieses Dokument wird zum Anspruch 2 als nächstliegender Stand der Technik angesehen. Aus der US-A 2008/141444 LIN ist ein plattenförmiges Tragelement für einen Klosettkörper bekannt. Dieses plattenförmige Tragelement umfasst zwei Befestigungselemente zur Befestigung des Keramikkörpers, ein erstes Loch für eine Spülwasserzufuhrleitung und ein zweites Loch für das Ablaufrohr. Ferner werden eine weitere Wasserzufuhrleitung und ein Elektrokabel für eine Unterdusche durch das erste Loch durchgeführt. Das Elektrokabel für die Unterdusche wird an einer an der Gebäudewand angebrachten Steckdose angeschlossen. Ferner ist an dem plattenförmigen Tragelement ein Ventil für die Spülwasserzufuhr angebracht. Nachteilig an dieser bekannten Montageplatte ist ebenfalls, dass beim Anbringen des Klosettkörpers an der Montageplatte die Gefahr besteht, dass die Wasser- und Stromleitungen gequetscht oder eingeklemmt werden.

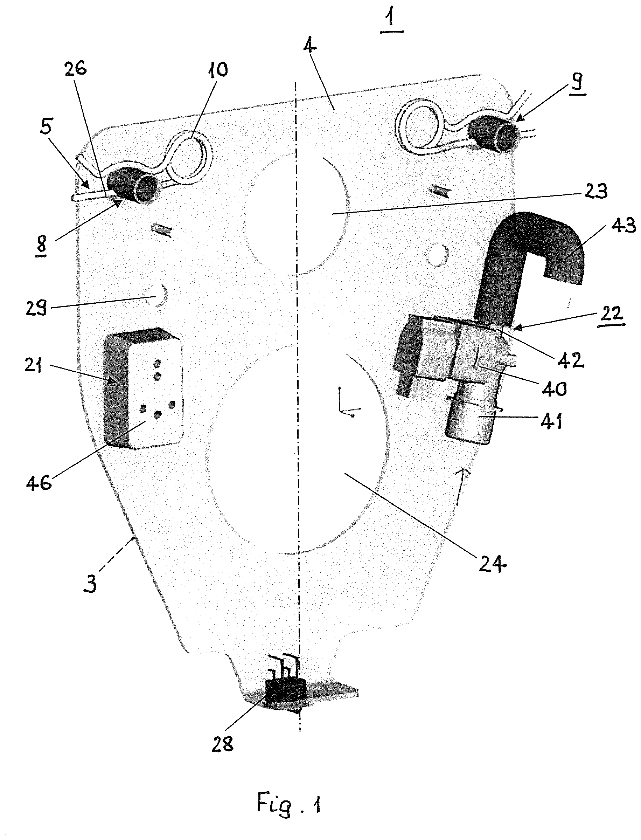

Das Dokument WO2012/051729 wird als nächstliegender Stand der Technik zum Anspruch 1 angesehen, und offenbart: eine Montageplatte für einen Klosettkörper eines Dusch-WC, umfassend: eine gebäudeseitige Installationsfläche; eine vordere Installationsfläche zur Verbindung mit einem Klosettkörper (siehe Figuren 1,6 und 7, Bezugszeichen 10="Verankerungselemente", Bezugszeichen 6="Tragelemente"; BEMERKUNG der in Figuren 6 und 7 gezeichnete Rahmen (siehe Bezugszeichen 3, 6 und 10) ist eigentlich keine "Platte" im Sinne von der vorliegenden Anmeldung); mindestens eine Öffnung für eine Durchführung einer Spülwasserzuführung und eines Ablaufs; Mittel zur Befestigung der Montageplatte an einer Gebäudewand; und ein erstes und ein zweites Tragelement, welche je auf einer linken und auf einer rechten Montageplattenhälfte an der vorderen Installationsfläche angeordnet sind und welche als Steckelemente für eine steckbare Montage eines Klosettkörpers an die Montageplatte ausgebildet sind.

Eine Andere Montageplatte ist in Dokument DE9410205U offenbart.

Hier will die Erfindung Abhilfe schaffen. Der Erfindung liegt die Aufgabe zugrunde, Montagemittel zur Verfügung zu stellen, welche eine einfachere und schnellere Montage, respektive Demontage einer sanitären Vorrichtung, insbesondere eines Dusch-WC's an einer Gebäudewand ermöglichen, ohne dass am Keramikkörper spezielle Montageöffnungen für einen Zugang zu den Befestigungselementen und Leitungen notwendig sind.

Die Erfindung löst die gestellte Aufgabe mit einer Montageplatte für einen Klosettkörper, welche die Merkmale des Anspruchs 1 aufweist, mit einem Klosettkörper, welcher die Merkmale des Anspruchs 2 aufweist, mit einer sanitären Vorrichtung, welche die Merkmale des Anspruchs 10 aufweist, mit einem Kit umfassend eine Montageplatte und einen Klosettkörper (vgl. Anspruch 11), mit einem Verfahren zur Montage der sanitären Vorrichtung, welches die Merkmale des Anspruchs 12 aufweist und mit einem Verfahren zur Entfernung eines Klosettkörpers von der Montageplatte, welches die Merkmale des Anspruchs 13 aufweist, und mit einer Verwendung der Montageplatte zur Befestigung eines Klosettkörpers an einer Gebäudewand (vgl. Anspruch 14). Die durch die Erfindung erreichten Vorteile sind im wesentlichen darin zu sehen, dass dank der erfindungsgemässen Montageplatte:
- eine einfache Montage, beziehungsweise Ausrichten und Anschrauben der Montageplatte z.B. an ein bauseitig vorhandenes Traggestell beispielsweise mittels Gewindestangen ermöglicht wird. Die handliche Montageplatte hat nur ein geringes Gewicht und bietet gute Zugänglichkeit;
- ein einfacher Anschluss der Wasser- und Stromanschlüsse an die Montageplatte erreichbar ist, d.h. alle Anschlüsse sind von vorne gut zugänglich, es ist ausreichend Platz vorhanden und der Arbeitsbereich kann gut eingesehen werden;
- an der Montageplatte ausreichend Platz vorhanden ist, um Überlängen der Leitungen sauber zu verstauen. Es wird somit Platz für die Wasser- und Stromleitungen geboten, so dass diese sauber verlegt werden können, z.B. können an oder in der Montageplatter vordefinierte Gehäuse vorgesehen sein, in welchen überschüssige Leitungslängen aufwickelbar sind;
- eine einfache und schnelle Montage des eigentlichen Dusch-WC's (Klosettkörper) lediglich durch Verschieben desselben auf die Montageplatte ermöglicht wird;
- an der Montageplatte automatisch einrastbare Arretiermittel anbringbar sind, so dass der Klosettkörper werkzeuglos an die Montageplatte montier-, respektive demontierbar ist, so dass:
   o im Servicefall der Klosettkörper inklusive Unterduschvorrichtung einfach von der Montageplatte abgenommen und repariert oder ersetzt werden kann;
   o keine speziellen Öffnungen am Klosettkörper notwendig sind, um Zugang zu Befestigungselementen zu bieten, so dass das Dusch-WC auch ästhetischer wirkt;
   o die Wasser- und Stromleitungen unberührt, immer noch sauber verlegt und geschützt bleiben, so dass keine Gefahr von Verletzungen der Leitungen besteht;
- keine Gefahr von Verklemmen oder Quetschen der Leitungen besteht; und
- kein Fachspezialist für die Montage notwendig ist, was vor allem im Servicefall von Vorteil ist.

Weitere vorteilhafte Ausgestaltungen der Erfindung können wie folgt kommentiert werden:

In einer speziellen Ausführungsform der Montageplatte umfassen das erste und zweite Tragelement Arretiermittel für einen einschnappbaren Eingriff in Führungselemente an einem Klosettkörper. Damit ist der Vorteil erreichbar, dass der Klosettkörper bei der Montage einfach soweit gegen die Montageplatte geschoben werden kann bis die an den Tragelementen angeordneten Arretiermittel in die Führungselemente am Klosettkörper einrasten, so dass der Klosettkörper an der Montageplatte durch die Trag- und Führungselemente befestigt und durch die Arretiermittel gesichert ist.

In einer weiteren Ausführungsform umfasst die Montageplatte ein Steuerelement, vorzugsweise ein Magnetventil, welches zusammen mit dem Wasserzufuhrstutzen eine absperrbare Wasserzuführung für eine Unterduschvorrichtung bildet. Vorzugsweise ist der Wasserzufuhrstutzen an der vorderen Installationsfläche der Montageplatte angeordnet. Damit ist der Vorteil erreichbar, dass die gebäudeseitige Wasserzuführleitung für die Unterdusche fest mit der Zutrittsöffnung des Magnetventils verbunden werden kann. Beim Gebrauch der Unterduschvorrichtung kann durch ein z.B. am Klosettkörper angebrachtes Bedienungselement das Magnetventil geöffnet werden, so dass die Unterduschvorrichtung mit Wasser gespiesen wird.

In wiederum einer anderen Ausführungsform der Montageplatte umfassen die Arretiermittel ein Federelement, so dass an einem Klosettkörper angeordnete Führungselemente einschnappbar mit den Tragelementen in Eingriff bringbar sind. Alternativ können die Arretiermittel Halteelemente umfassen, mit welchen Federelemente von ersten und zweiten Führungselementen eines Klosettkörpers einschnappbar in Eingriff bringbar sind. Damit wird der Vorteil erzielt, dass die an den Tragelementen angeordneten Arretiermittel in die Führungselemente einrasten können, so dass keine weiteren Sicherungselemente zur Befestigung des Klosettkörpers an der Montageplatte notwendig sind.

In einer speziellen Ausführungsform des Klosettkörpers umfassen die Führungselemente Halteelemente für eine einschnappbare Verbindung mit Tragelementen an einer Montageplatte. Vorzugsweise umfassen die Halteelemente Nuten, mit welchen Federelemente von ersten und zweiten Tragelementen einer Montageplatte einschnappbar in Eingriff bringbar sind. Alternativ können die Halteelemente je ein Federelement umfassen, so dass an einer Montageplatte angeordnete Tragelemente einschnappbar mit den Führungselementen in Eingriff bringbar sind. Vorzugsweise umfassen hier die Tragelemente je eine Nut mit einer gegen die vordere Installationsfläche gerichteten ersten Seitenfläche und einer von der vorderen Installationsfläche weg gerichteten zweiten Seitenfläche. Dabei bilden die gegen die vordere Installationsfläche gerichteten ersten Seitenflächen der Nuten eine Schulterfläche, welche ein Ausrasten von am Klosettkörper angeordneten Federelementen in einer zur vorderen Installationsfläche senkrechten Richtung verhindert. Der Klosettkörper somit kann durch Einklicken der Federelemente an der Montageplatte befestigt werden, aber nicht durch Wegziehen von der Montageplatte entfernt werden.

In einer anderen Ausführungsform umfasst der Klosettkörper einen Anschluss für eine elektronische Signalübertragung, welcher für eine zur Rückseite des Keramikkörpers senkrecht steckbare Verbindung mit einem komplementären Anschluss für eine elektronische Signalübertragung ausgebildet ist.

In einer weiteren Ausführungsform des Klosettkörpers ist der Hohlraum im Keramikkörper für eine Aufnahme von Technikelementen einer Unterduschvorrichtung ausgebildet. Vorzugsweise umfasst der Keramikkörper an seiner Rückseite einen den Hohlraum peripher begrenzenden Keramikrand, wobei der Keramikrand eine Fläche umschliesst, die grösser als die erfindungsgemässe Montageplatte ist. Vorzugsweise bedeckt der Keramikrand bei an der Montageplatte montiertem Klosettkörper die Montageplatte vollständig. Das Verhältnis F_{Keramik} : F_{Montageplatte} zwischen der vom Keramikrand umschlossenen Fläche F_{Keramik} und dem Flächeninhalt der gebäudeseitigen und/oder der vorderen Installationsfläche F_{Montageplatte} beträgt vorzugsweise maximal 0,95, vorzugsweise maximal 0,8.

In einer anderen Ausführungsform des Klosettkörpers umfasst die Unterduschvorrichtung einen Behälter mit einer gegen die Oberseite des Klosettkörpers offenen Behälteröffnung, so dass der Behälter durch eine an einer Montageplatte angeordnete Wasserzuführung mit Wasser befüllbar ist. Vorzugsweise ist die Unterduschvorrichtung im Hohlraum des Klosettkörpers angeordnet.

Vorzugsweise wird die Montageplatte zur Befestigung eines Klosettkörpers insbesondere eines Dusch-WC an einer Gebäudewand verwendet.

Die Erfindung und Weiterbildungen der Erfindung werden im Folgenden anhand der teilweise schematischen Darstellungen eines Ausführungsbeispiels noch näher erläutert.

Es zeigen:
Fig. 1 eine perspektivische Ansicht einer Ausführungsform der erfindungsgemässen Montageplatte von der Vorderseite;
Fig. 2 eine perspektivische Ansicht einer Ausführungsform des erfindungsgemässen Klosettkörpers von der Hinterseite;
Fig. 3 eine perspektivische Ansicht des an der Montageplatte montierten Klosettkörper von der Hinterseite, wobei die Montageplatte transparent eingezeichnet ist; und
Fig. 4 eine Ausführungsform eines Schnellverschlusses, welcher beispielsweise für eine lösbare steckbare Befestigung des erfindungsgemässen Klosettkörpers an der erfindungsgemässen Montageplatte geeignet ist.

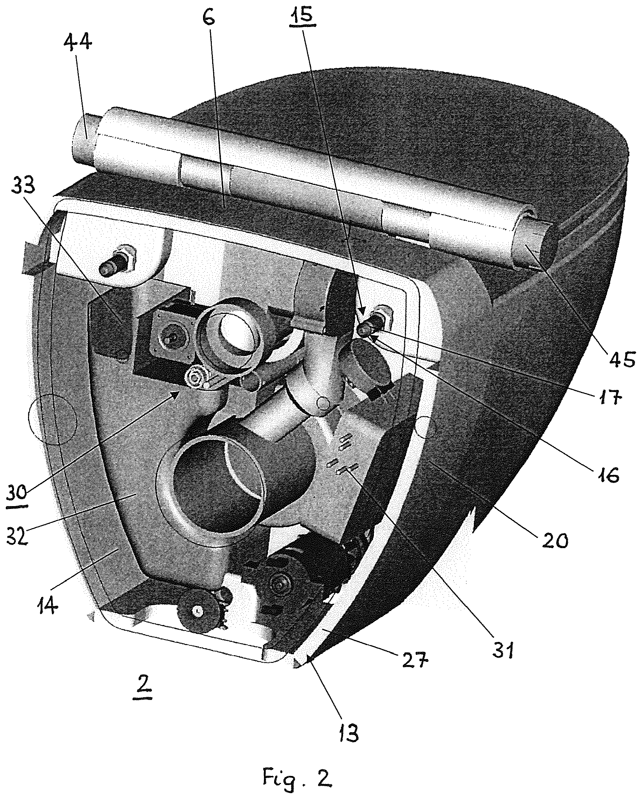

In Fig. 1 ist beispielhaft eine Ausführungsform der erfindungsgemässen Montageplatte 1 dargestellt. Die Montageplatte 1 ist für eine Befestigung eines Klosettkörpers 2 eines Dusch-WC's ausgebildet und umfasst eine gebäudeseitige Installationsfläche 3, eine vordere Installationsfläche 4 zur Verbindung mit dem Klosettkörper 2 (Fig. 2) und je eine Öffnung 23, 24 für die Durchführung einer Spülwasserzuführung und eines Ablaufs. An der Montageplatte 1 sind Mittel 29 zur Befestigung der Montageplatte 1 an einer Gebäudewand oder an einem bauseits vorhandenen Trag- oder Montagegestell angeordnet. Die Mittel 29 zur Befestigung der Montageplatte 1 sind als Bohrungen in der Montageplatte 1 ausgeführt, so dass z.B. Gewindestangen, welche an dem bauseitigen Trag- oder Montagegestell befestigt sind, durch diese Bohrungen durchführbar sind und die Montageplatte 1 mittels auf diese Gewindestangen aufschraubbaren Muttern am bauseitigen Trag- oder Montagegestell befestigbar ist. Ferner umfasst die Montageplatte 1 ein erstes und ein zweites Tragelement 8, 9, welche je auf einer linken und auf einer rechten Seite der vorderen Installationsfläche 4 angeordnet sind und welche als Steckelemente für eine steckbare Montage des Klosettkörpers 2 (Fig. 2) an die Montageplatte 1 ausgebildet sind. An der vorderen Installationsfläche 4 der Montageplatte 1 ist zudem eine Elektroschnittstelle 21 und eine Wasserzuführung 22 angeordnet, welche für eine Wasserzufuhr an einen im Klosettkörper 2 angeordneten Behälter 32 (Fig. 2) geeignet ist. Die Montageplatte 1 kann eine Dicke von typischerweise ca. 40 - 50 mm aufweisen.

Die Wasserzuführung 22 für die im Klosettkörper 2 angeordnete Unterduschvorrichtung 30 umfasst in der hier dargestellten Ausführungsform der Montageplatte 1 ein Steuerelement, welches als Magnetventil 40 ausgebildet sein kann. Ferner umfasst die Wasserzuführung 22 einen Wasserzufuhrstutzen 43, welcher als Rohrbogen ausgebildet ist und derart an der Ausgangsöffnung 42 des Magnetventils 40 angeordnet ist, dass der Rohrbogen im Wesentlichen senkrecht zur vorderen Installationsfläche 4 von dieser weggerichtet und die Öffnung des Rohrbogens gegen die untere Seite der Montageplatte 1 gerichtet ist. Damit kann der Wasserzufuhrstutzen 43 der Wasserzuführung 22 bei der Montage des Klosettkörpers an die Montageplatte 1 in den an der Rückseite 13 des Klosettkörpers 2 offenen Hohlraum 14 (Fig. 2) so weit eingeschoben werden, bis die Öffnung des Rohrbogens über eine gegen die Oberseite des Klosettkörpers 2 offene Behälteröffnung 33 des Behälters 32 zu liegen kommt, so dass der Behälter 32 durch die Wasserzuführung 22 mit Wasser gespiesen werden kann. Eine gebäudeseitig vorhandene Wasserleitung kann somit bei der Montage der Montageplatte 1 an der Zutrittsöffnung 41 des Magnetventils 40 mittels eines Rohr- oder Schlauchstücks fest angeschlossen werden. Bei der späteren Montage des Klosettkörpers 2 an die Montageplatte 1 muss dann keine Rohr- oder Schlauchverbindung für die Wasserzuführung an die Unterduschvorrichtung 30 vorgenommen werden. Der Klosettkörper 2 kann einfach im Wesentlichen senkrecht zur vorderen Installationsfläche 4 gegen die Montageplatte 1 geschoben werden.

Die Elektroschnittstelle 21 umfasst einen Elektroanschluss, welcher als elektrischer Steckverbinder 46 und vorzugsweise als Steckdose ausgebildet ist. Alternativ kann der Elektroanschluss auch als elektrischer Stecker ausgebildet sein. Dadurch, dass der elektrische Steckverbinder zur vorderen Installationsfläche 4 senkrecht mit einem komplementären Steckverbinder am Klosettkörper 2 verbindbar ist, wird gewährleistet, dass der Klosettkörper 2 bei der Montage an die Montageplatte 1 von vorne, d.h. im Wesentlichen senkrecht zur vorderen Installationsfläche 4 gegen die Montageplatte 1 geschoben werden kann. Die Elektroschnittstelle 21 kann eine Anschlussstelle für eine elektrische Signalübertragung umfassen, z.B. Steuerleitungen (nicht gezeichnet) für das beispielhaft als Magnetventil 40 ausgebildete Steuerelement der Wasserzuführung 22. Die Steuersignale für das Steuerelement der Wasserzuführung 22 können somit durch ein erstes Bedienungselement 44 am Klosettkörper 2 (Fig. 2) ausgelöst werden. Ferner kann die Montageplatte 1 einen Anschluss 28 für eine elektronische Signalübertragung umfassen, welcher vorzugsweise ebenfalls für eine zur vorderen Installationsfläche 4 senkrecht steckbare Verbindung mit einem komplementären Anschluss am Klosettkörper 2 (nicht gezeichnet) für eine elektronische Signalübertragung ausgebildet ist, so dass z.B. Steuersignale von einem am Klosettkörper 2 angeordneten zweiten Bedienungselement 45 (Fig. 2) an eine Wasserspülung übertragbar sind.

Das erste und zweite Tragelement 8, 9 können je eine an der Montageplatte 1 befestigte Hülse umfassen, deren Bohrungen senkrecht zur vorderen Installationsfläche 4 angeordnet sind, so dass am Klosettkörper 2 angeordnete Führungselemente 15 (Fig. 2), welche als Bolzen ausgebildet sein können, bei der Montage des Klosettkörpers 2 an die Montageplatte 1 in die Bohrungen im ersten und zweiten Tragelement 8, 9 eingeschoben werden können. Zudem umfassen das erste und zweite Tragelement 8, 9 Arretiermittel 5 für einen einschnappbaren Eingriff in die Führungselemente 15 am Klosettkörper 2. Die Arretiermittel 5 umfassen Federelemente 10, welche einschnappbar in die an den Führungselementen 15 des Klosettkörpers 2 angeordneten Halteelemente 16 ausgebildet und angeordnet sind. Die Tragelemente 8, 9 an der Montageplatte 1 und die Führungselemente 15 am Klosettkörper 2 sind als rigide Bauteile ausgeführt und dienen dazu, den Klosettkörper 2 an der Montageplatte 1 zu halten, wobei der an der Montageplatte 1 montierte Klosettkörper 2 durch die in die Haltelemente 16 eingreifenden Arretiermittel 5 in seiner Position gesichert wird.

Die Federelemente 10 sind als Federstecker ausgebildet, wovon je ein Federstecker in einer zur vorderen Installationsfläche 4 im Wesentlichen parallelen Ebene an einem Tragelement 8, 9 montierbar und demontierbar ist. Dabei umfassen die Federelemente 10 zwei in einer zur vorderen Installationsfläche 4 im Wesentlichen parallelen Ebene nebeneinander angeordnete Schenkel 26, welche elastisch spreizbar sind, so dass sie mit Halteelementen 16, welche an den Führungselementen 15 des Klosettkörpers 2 (Fig. 2) angeordnet sind, einschnappbar in Eingriff bringbar sind. Der Klosettkörper 2 kann somit senkrecht zur vorderen Installationsfläche gegen die Montageplatte 1 geschoben werden, bis die an den Tragelementen 8, 9 angeordneten Federelemente 10 in die Halteelemente 16 an den Führungselementen 15 des Klosettkörpers 2 einschnappen. Zur Demontage des Klosettkörpers 2 können die Federelemente 10 mittels einer an den Federelementen 10 befestigten Schnur oder eines Drahts von der Unterseite des Klosettkörpers 2 einfach gedreht werden, bis sie aus den Haltelementen 16 ausrasten und die Führungselemente 15 freigegeben. Wird die Schnur gelöst, so federn die Federelemente 10 zurück und der Klosettkörper 2 kann später erneut eingerastet werden.

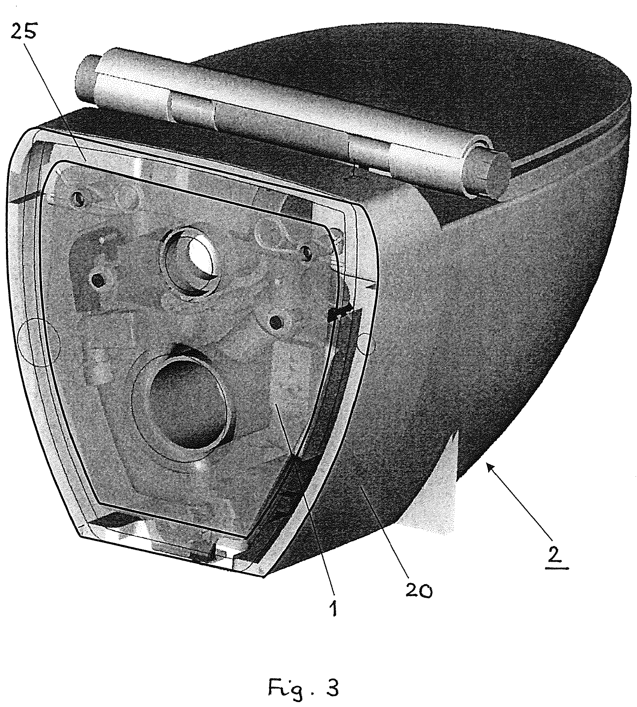

In den Fig. 2 und 3 ist eine Ausführungsform des erfindungsgemässen Klosettkörpers 2 zur steckbaren Montage an eine Montageplatte 1 gemäss Fig. 1 dargestellt. Der Klosettkörper 2 umfasst einen Keramikkörper 20 mit einer gebäudeseitigen Rückseite 13 und einem an der Rückseite 13 offenen Hohlraum 14. Zwei horizontal voneinander beabstandete Führungselemente 15 sind im Hohlraum 14 am Keramikkörper 20 befestigt und für eine steckbare Verbindung mit den Tragelementen 8, 9 an der Montageplatte 1 ausgebildet. Die Führungselemente 15 bilden zugleich die Tragelemente des Klosettkörpers 2. Ferner umfasst der Klosettkörper 2 eine Unterduschvorrichtung 30 mit einem Elektroanschluss 31, welcher als von Rückseite 13 des Keramikkörpers 20 zugänglicher elektrischer Steckverbinder ausgebildet ist. Der Elektroanschluss 31 ist vorzugsweise als zur Steckdose an der Montageplatte 1 komplementärer elektrischer Stecker ausgebildet, kann aber alternativ auch als Steckdose ausgebildet sein.

Die Unterduschvorrichtung 30 umfasst einen Behälter 32, welcher eine gegen oben offene Behälteröffnung 33 aufweist, so dass wie oben beschrieben bei einer Montage des Klosettkörpers 2 an die Montageplatte 1 der Wasserzufuhrstutzen 43 der Wasserzuführung 22 an der Montageplatte 1 in den an der Rückseite 13 des Klosettkörpers 2 offenen Hohlraum 14 so weit eingeschoben werden kann, bis die Öffnung des Rohrbogens über die Behälteröffnung 33 des Behälters 32 zu liegen kommt, so dass der Behälter 32 durch die Wasserzuführung 22 mit Wasser gespiesen werden kann.

Die Führungselemente 15 sind als Bolzen ausgebildet und umfassen Halteelemente 16 für eine einschnappbare Verbindung mit den Tragelementen 8, 9 an der Montageplatte 1. Die Federelemente 10 an den ersten und zweiten Tragelementen 8, 9 der Montageplatte 1 sind mit den Halteelementen 16 einschnappbar in Eingriff bringbar. Die Halteelemente 16 sind als Nuten 17 mit einer gegen die Rückseite 13 des Klosettkörpers 2 gerichteten ersten Seitenfläche und einer von der Rückseite 13 weg gerichteten zweiten Seitenfläche ausgebildet. Dabei bilden die von der Rückseite 13 des Klosettkörpers 2 weg gerichteten zweiten Seitenflächen der Nuten 17 eine Schulterfläche, welche ein Ausrasten der an der Montageplatte 1 angeordneten Federelemente 10 in einer zur Rückseite 13 senkrechten Richtung verhindern. Bei der Montage des Klosettkörpers 2 an die Montageplatte 1 wird der Klosettkörper 2 soweit gegen die Montageplatte 1 geschoben, bis je einer der Schenkel 26 der an den Tragelementen 8, 9 angeordneten Federelemente 10 in eine der Nuten 17 an den Führungselementen 15 des Klosettkörpers 2 einschnappt.

Alternativ können die Tragelemente 8, 9 an der Montageplatte 1 und die Führungselemente 15 am Klosettkörper 2 vertauscht sein, so dass die Tragelemente 8, 9 als Bolzen und die Führungselemente 15 als Hülsen wie oben beschrieben ausgebildet sind. In diesem Fall können die Halteelemente 16 an den Führungselementen 15 des Klosettkörpers 2 und die Arretiermittel 5 an den Tragelementen 8, 9 der Montageplatte 1 ebenfalls vertauscht werden, so dass die Halteelemente 16 an den Führungselementen 15 des Klosettkörpers 2 je ein Federelement 10 wie oben beschrieben umfassen, während die Arretiermittel 5 an den Tragelementen 8, 9 der Montageplatte 1 dann als Nuten 17 ausgebildet sein können.

Der Keramikkörper 20 umfasst an seiner Rückseite 13 einen den Hohlraum 14 peripher begrenzenden Keramikrand 27 (Fig. 2), welcher eine Fläche umschliesst, die grösser als die Montageplatte 1 ist. Bei an die Montageplatte 1 montiertem Klosettkörper 2 verbleibt vorzugsweise ein Abstand zwischen dem Keramikkörper 20 und einer Gebäudewand und eine Dichtung 25 (Fig. 3) oder Dichtmaterial wird in den durch den Abstand gebildeten Zwischenraum zwischen dem Keramikkörper 20 und der Gebäudewand eingefügt.

Zur Montage einer sanitären Vorrichtung, welche eine erfindungsgemässe Montageplatte 1 und einen erfindungsgemässen Klosettkörper 2 umfasst, werden die folgenden Schritte ausgeführt: a) Befestigen der Montageplatte 1 an der Gebäudewand; b) Verbinden der Elektroschnittstelle 21 und der Wasserzuführung 22 mit entsprechenden gebäudeseitigen Anschlüssen; c) Befestigen des Klosettkörpers 2 an der Montageplatte 1 durch Einschieben der Führungselemente 15 in das erste und zweite Tragelement 8, 9 bis die Federelemente 10 in die Nuten 17 einschnappen; und d) Anbringen einer Dichtung 25 oder eines Dichtmaterials in einem zwischen dem Keramikkörper 20 und einer Gebäudewand gebildeten Zwischenraum.

Der Klosettkörper 2 kann anschliessend wieder von der Montageplatte 1 entfernt werden, wobei dazu die folgenden Schritte ausgeführt werden: e) Verdrehen der Federelemente 10 bis die Tragelemente 8, 9 oder Führungselemente 15 freigegeben sind mittels einer Schnur oder eines Drahtes; und f) Wegziehen des Klosettkörpers 2 von der Montageplatte 1 in einer zur vorderen Installationsfläche 4 der Montageplatte 1 senkrechten Richtung. Wird die Schnur oder der Draht gelöst, so federn die Federelemente 10 wieder zurück und der Klosettkörper 2 kann später erneut eingerastet werden.

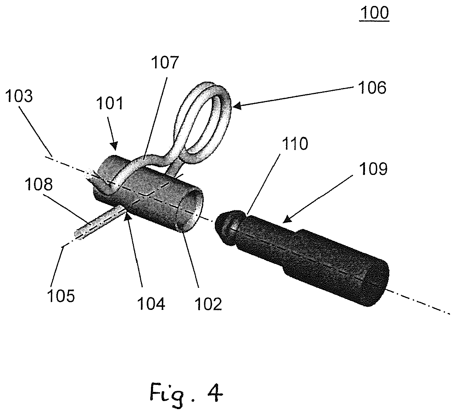

In Fig. 4 ist ein Schnellverschluss 100 mit Vorsteckfeder dargestellt, welcher beispielsweise für eine lösbare steckbare Befestigung des erfindungsgemässen Klosettkörpers 2 an der erfindungsgemässen Montageplatte 1 geeignet ist.

Der Schnellverschluss 100 umfasst im Wesentlichen:
A) eine an einem ersten Bauteil, z.B. an der Montageplatte 1 befestigte oder befestigbare rohrförmige Aufnahme 101 mit einem Mantel 102, einer Längsachse 103 und einem den Mantel 102 durchdringenden Schlitz 104, welcher eine zur Längsachse 103 der rohrförmigen Aufnahme 101 windschiefe Schlitzachse 105 aufweist;
B) eine Vorsteckfeder 106 mit einem ersten bogenförmig gekrümmten Schenkel 107 und einem zweiten geraden Schenkel 108, wobei der erste Schenkel 107 aussen um einen Teil des Mantels 102 der rohrförmigen Aufnahme 101 geführt wird und der zweite Schenkel 108 durch den Schlitz 104 in der rohrförmigen Aufnahme 101 geführt wird; und
C) einen an einem zweiten Bauteil, z.B. am Klosettkörper 2 befestigten oder befestigbaren Bolzen 109, welcher in die rohrförmige Aufnahme 101 einschiebbar ist und welcher eine peripher mindestens teilweise umlaufende Nut 110 aufweist, mit welcher der zweite gerade Schenkel 108 der Vorsteckfeder 106 einschnappbar in Eingriff bringbar ist.

Durch Drehen der Vorsteckfeder 106 in einer zur Längsachse 103 der rohrförmigen Aufnahme 101 senkrechten Ebene um ca. 35° wird die Verriegelung des Bolzens 109 in der rohrförmigen Aufnahme 101 freigegeben. Wird der Drehwinkel auf ca. maximal 60° begrenzt springt die Vorsteckfeder 106 selbstständig in ihre Ausgangslage zurück.

Obwohl wie oben beschrieben verschiedene Ausführungsformen der vorliegenden Erfindung vorliegen, sind diese so zu verstehen, dass die verschiedenen Merkmale sowohl einzeln als auch in jeder beliebigen Kombination verwendet werden können.

Diese Erfindung ist daher nicht einfach auf die oben erwähnten, besonders bevorzugten Ausführungsformen beschränkt.

## Patentansprüche

1. Montageplatte (1) für einen Klosettkörper (2), vorzugsweise eines Dusch-WC, umfassend:
eine gebäudeseitige Installationsfläche (3);
eine vordere Installationsfläche (4) zur Verbindung mit einem Klosettkörper (2);
mindestens eine Öffnung (23, 24) für eine Durchführung einer Spülwasserzuführung und eines Ablaufs;
Mittel (29) zur Befestigung der Montageplatte (1) an einer Gebäudewand; und
ein erstes und ein zweites Tragelement (8, 9), welche je auf einer linken und auf einer rechten Montageplattenhälfte an der vorderen Installationsfläche (4) angeordnet sind und welche als Steckelemente für eine steckbare Montage eines Klosettkörpers (2) an die Montageplatte (1) ausgebildet sind,
einen an der vorderen Installationsfläche (4) angeordneten elektrischen Steckverbinder (46); und
einen Wasserzufuhrstutzen (43), welcher für eine Wasserzufuhr an einen in einem Klosettkörper (2) angeordneten Behälter (32) geeignet ist.

2. Klosettkörper (2) zur steckbaren Montage an die Montageplatte (1) nach Anspruch 1, umfassend:
einen Keramikkörper (20) mit einer gebäudeseitigen Rückseite (13), einer Oberseite (6) und einem an der Rückseite (13) offenen Hohlraum (14);
zwei oder mehr horizontal voneinander beabstandete Führungselemente (15), welche im Hohlraum (14) am Keramikkörper (20) befestigt sind und für eine steckbare Verbindung mit Tragelementen (8, 9) an der Montageplatte (1) ausgebildet sind; und
eine Unterduschvorrichtung (30) mit einem Elektroanschluss (31); wobei
der Elektroanschluss (31) am Klosettkörper (2) fest angeordnet ist und als von der Rückseite (13) des Keramikkörpers (20) zugänglicher Steckverbinder ausgebildet ist.

3. Montageplatte (1) nach Anspruch 1, **dadurch gekennzeichnet, dass** das erste und zweite Tragelement (8, 9) Arretiermittel (5) für einen einschnappbaren Eingriff in Führungselemente (15) an einem Klosettkörper (2) umfassen.

4. Montageplatte nach Anspruch 1 oder 3, **dadurch gekennzeichnet, dass** die Montageplatte (1) ein Steuerelement umfasst, vorzugsweise ein Magnetventil (40), welches zusammen mit dem Wasserzufuhrstutzen (43) eine absperrbare Wasserzuführung (22) für eine Unterduschvorrichtung (30) bildet.

5. Montageplatte (1) nach Anspruch 3 oder 4, **dadurch gekennzeichnet, dass**:
die Arretiermittel (5) ein Federelement (10) umfassen, so dass an einem Klosettkörper angeordnete Führungselemente (15) einschnappbar mit den Tragelementen (8, 9) in Eingriff bringbar sind;
oder
die Arretiermittel (5) Halteelemente (16) umfassen, mit welchen Federelemente (10) von ersten und zweiten Führungselementen (15) eines Klosettkörpers (2) einschnappbar in Eingriff bringbar sind.

6. Klosettkörper (2) nach Anspruch 2, **dadurch gekennzeichnet, dass** die Führungselemente (15) Halteelemente (16) für eine einschnappbare Verbindung mit Tragelementen (8, 9) an der Montageplatte (1) umfassen.

7. Klosettkörper (2) nach Anspruch 6, **dadurch gekennzeichnet, dass**
die Halteelemente (16) Nuten (17) umfassen, mit welchen Federelemente (10) von ersten und zweiten Tragelementen (8, 9) einer Montageplatte (1) einschnappbar in Eingriff bringbar sind;
oder
die Halteelemente (16) je ein Federelement (10) umfassen, so dass an einer Montageplatte (1) angeordnete Tragelemente (8, 9) einschnappbar mit den Führungselementen (15) in Eingriff bringbar sind.

8. Klosettkörper nach einem der Ansprüche 2 oder 6 oder 7, **dadurch gekennzeichnet, dass** der Keramikkörper (20) an seiner Rückseite (13) einen den Hohlraum (14) peripher begrenzenden Keramikrand (27) umfasst, wobei der Keramikrand (27) eine Fläche umschliesst, die grösser als eine Montageplatte (1) gemäss einem der Ansprüche 1 oder 4 bis 6 ist.

9. Klosettkörper nach einem der Ansprüche 2 oder 6 bis 8, **dadurch gekennzeichnet, dass** die Unterduschvorrichtung (30) einen Behälter (32) mit einer gegen die Oberseite (6) des Klosettkörpers (2) offenen Behälteröffnung (33) umfasst, so dass der Behälter (32) durch eine an einer Montageplatte (1) angeordnete Wasserzuführung (22) mit Wasser befüllbar ist.

10. Sanitäre Vorrichtung umfassend eine Montageplatte (1) nach einem der Ansprüche 1 oder 3 bis 5 und einen Klosettkörper (2) nach einem der Ansprüche 2 oder 6 bis 9.

11. Kit umfassend eine Montageplatte (1) nach einem der Ansprüche 1 oder 3 bis 5 und einen Klosettkörper (2) nach einem der Ansprüche 2 oder 6 bis 9.

12. Verfahren zur Montage einer sanitären Vorrichtung umfassend eine Montageplatte (1) nach Anspruch 5 und einen Klosettkörper (2) nach einem der Ansprüche 6 bis 9 **gekennzeichnet durch** die Schritte:
Befestigen einer Montageplatte (1) an einer Gebäudewand;
Verbinden der Elektroschnittstelle (21) und der Wasserzuführung (22) mit entsprechenden gebäudeseitigen Anschlüssen;
Befestigen des Klosettkörpers (2) an der Montageplatte (1) durch Einschieben der Führungselemente (15) in das erste und zweite Tragelement (8, 9) bis die Federelemente (10) in die Halteelemente (16) einschnappen; und
Anbringen einer Dichtung (25) oder eines Dichtmaterials in einem zwischen dem Keramikkörper (20) und einer Gebäudewand gebildeten Zwischenraum.

13. Verfahren zur Entfernung eines Klosettkörpers (2) einer sanitären Vorrichtung umfassend eine Montageplatte (1) nach Anspruch 5 und einen Klosettkörper (2) nach einem der Ansprüche 6 bis 9 von einer an eine Gebäudewand befestigten Montageplatte (1), **gekennzeichnet durch** die Schritte:
Verdrehen der Federelemente (10) bis die Tragelemente (8, 9) oder Führungselemente (15) freigegeben sind mittels einer Schnur oder eines Drahtes; und
Wegziehen des Klosettkörpers (2) von der Montageplatte (1).

14. Verwendung der Montageplatte (1) nach einem der Ansprüche 1 oder 3 bis 5 zur Befestigung eines Klosettkörpers (2) nach einem der Ansprüche 2 oder 6 bis 9 an einer Gebäudewand.

## Claims

1. A mounting plate (1) for a toilet body (2), preferably a washlet, comprising:
a building-side installation surface (3);
a front installation surface (4) for connection with a toilet body (2);
at least one opening (23, 24) for implementation of rinsing water delivery and discharge;
means (29) for fastening the mounting plate (1) on a building wall; and
a first and a second supporting element (8, 9), which are each arranged on a left and on a right half of the mounting plate on the front installation surface (4) and which are formed as plug-in elements for a pluggable mounting of a toilet body (2) onto the mounting plate (1);
an electrical plug connector (46) arranged on the front installation surface (4); and
a short water feed pipe (43), which is suitable for water delivery to a container (32) arranged in a toilet body (2).

2. A toilet body (2) for pluggable mounting on the mounting plate (1) according to Claim 1, comprising:
a ceramic body (20) with a building-side rear side (13), an upper side (6), and a cavity (14) which is open on the rear side (13);
two or more guide elements (15) spaced horizontally from one another, which are fastened in the cavity (14) on the ceramic body (20) and formed for a pluggable connection to supporting elements (8, 9) on the mounting plate (1); and
a lower spray device (30) with an electrical connection (31); wherein
the electrical connection (31) is arranged firmly on the toilet body (2) and designed as a plug-in connector that is accessible from the rear side (13) of the ceramic body (20).

3. The mounting plate (1) according to Claim 1, **characterized in that** the first and second supporting elements (8, 9) comprise locking means (5) for snapping engagement in guide elements (15) on a toilet body (2).

4. The mounting plate according to Claim 1 or 3, **characterized in that** the mounting plate (1) comprises a control element, preferably a magnetic valve (40), which, together with the short water feed pipe (43), forms a water feed (22) for a lower spray device (30), that can be cut off.

5. The mounting plate (1) according to Claim 3 or 4, **characterized in that**:
the locking means (5) comprise a spring element (10), so that guide elements (15) arranged on a toilet body can be engaged by snapping with the supporting elements (8, 9);
or
the locking means (5) comprise holding elements (16) with which spring elements (10) of first and second guide elements (15) of a toilet body (2) can be engaged by snapping.

6. A toilet body (2) according to Claim 2, **characterized in that** the guide elements (15) comprise holding elements (16) for a snapping connection with supporting elements (8, 9) on the mounting plate (1).

7. The toilet body (2) according to Claim 6, **characterized in that**
the holding elements (16) comprise grooves (17) with which spring elements (10) of first and second supporting elements (8, 9) of a mounting plate (1) can be engaged by snapping;
or
the holding elements (16) each comprise a spring element (10), so that supporting elements (8, 9) arranged on a mounting plate (1) can be engaged by snapping with the guide elements (15).

8. The toilet body according to Claim 2 or 6 or 7, **characterized in that** the ceramic body (20) comprises, on the rear side (13) thereof, a ceramic rim (27) which peripherally borders the cavity (14), wherein the ceramic rim (27) encloses an area which is greater than a mounting plate (1) according to any one of Claims 1 or 4 to 6.

9. The toilet body according to any one of Claims 2 or 6 to 8, **characterized in that** the lower spray device (30) comprises a container (32) with a container opening (33) open toward the upper side (6) of the toilet body (2), so that the container (32) can be filled with water through a water feed (22) arranged on a mounting plate (1).

10. A sanitary device comprising a mounting plate (1) according to any one of Claims 1 or 3 to 5 and a toilet body (2) according to any one of Claims 2 or 6 to 9.

11. A kit comprising a mounting plate (1) according to any one of Claims 1 or 3 to 5, and a toilet body (2) according to any one of Claims 2 or 6 to 9.

12. A method for mounting a sanitary device comprising a mounting plate (1) according to Claim 5 and a toilet body (2) according to any one of Claims 6 to 9, **characterized by** the steps of:
fastening a mounting plate (1) on a building wall;
connecting the electrical interface (21) and the water feed (22) to corresponding building-side connectors;
fastening the toilet body (2) on the mounting plate (1) by inserting the guide elements (15) into the first and second supporting elements (8, 9) until the spring elements (10) snap into the holding elements (16); and
application of a seal (25) or a sealing material in a gap formed between the ceramic body (20) and a building wall.

13. A method for removing a toilet body (2) of a sanitary device comprising a mounting plate (1) according to Claim 5 and a toilet body (2) according to any one of Claims 6 to 9, from a mounting plate (1) fastened on a building wall, **characterized by** the steps of:
rotating the spring elements (10) by means of a string or a wire until the supporting elements (8, 9) or guide elements (15) are released; and
pulling the toilet body (2) away from the mounting plate (1).

14. Use of the mounting plate (1) according to any one of Claims 1 or 3 to 5 for fastening a toilet body (2) according to any one of Claims 2 or 6 to 9 on a building wall.

## Revendications

1. Plaque de montage (1) destinée à un corps de toilettes (2), de préférence des toilettes à douche intégrée, comprenant :
une surface d'installation (3) côté bâtiment;
une surface d'installation avant (4) destinée à être reliée à un corps de toilettes (2);
au moins une ouverture (23, 24) destinée à effectuer une amenée d'eau de rinçage et une évacuation;
des moyens (29) destinés à fixer la plaque de montage (1) sur une paroi de bâtiment; et
des premier et second éléments de support (8, 9) qui sont disposés respectivement sur une moitié de plaque de montage gauche et une moitié de plaque de montage droite sur la surface de montage avant (4) et réalisés sous la forme d'éléments enfichable destinés au montage par enfichage d'un corps de toilettes (2) sur la plaque de montage (1),
un connecteur électrique enfichable (46) disposé sur la surface d'installation avant (4); et
une buse d'amenée d'eau (43) appropriée pour amener de l'eau à un récipient (32) disposé dans le corps de toilettes (2).

2. Corps de toilettes (2), destiné à être monté sur la plaque de montage (1) selon la revendication 1, comprenant:
un corps en céramique (20) comportant un côté arrière côté bâtiment (13), un côté supérieur (6) et une cavité (14) ouverte du côté arrière (13);
deux éléments de guidage (15) ou plus espacés horizontalement qui sont fixés dans la cavité (14) du corps en céramique (20) et qui sont conçus pour être reliés par enfichage à des éléments de support (8, 9) au niveau de la plaque de montage (1) formée; et
un dispositif de douche inférieure (30) muni d'une connexion électrique (31);
la connexion électrique (31) étant disposée de manière fixe sur le corps de toilettes (2) et étant conçue sous la forme d'un connecteur enfichable accessible depuis le côté arrière (13) du corps en céramique (20).

3. Plaque de montage (1) selon la revendication 1, **caractérisée en ce que** les premier et second éléments de support (8, 9) comprennent des moyens de verrouillage (5) destiné à un engagement par encliquetage dans des éléments de guidage (15) au niveau d'un corps de toilettes (2).

4. Plaque de montage selon la revendication 1 ou 3, **caractérisée en ce que** la plaque de montage (1) comprend un élément de commande, de préférence une électrovanne (40) qui forme, conjointement avec la buse d'amenée d'eau (43), une amenée d'eau (22), pouvant être fermée, qui est destinée à un dispositif de douche inférieure (30).

5. Plaque de montage (1) selon la revendication 3 ou 4, **caractérisée en ce que**:
les moyens de verrouillage (5) comprennent un élément à ressort (10) de sorte que des éléments de guidage (15), disposés au niveau d'un corps de toilettes (15), peuvent être amenés en engagement par encliquetage avec les éléments de support (8, 9);
ou
les moyens de verrouillage (5) comportent des éléments de retenue (16) avec lesquels peuvent être amenés en engagement par encliquetage des éléments à ressort (10) de premier et second éléments de guidage (15) d'un corps de toilettes (2).

6. Corps de toilettes (2) selon la revendication 2, **caractérisé en ce que** les éléments de guidage (15) comportent des éléments de retenue (16) destinés à être reliés par encliquetage à des éléments de support (8, 9) au niveau de la plaque de montage (1).

7. Corps de toilettes (2) selon la revendication 6, **caractérisé en ce que**
les éléments de retenue (16) comportent des rainures (17) avec lesquelles des éléments à ressort (10) de premier et second éléments de support (8, 9) d'une plaque de montage (1) peuvent être amenés en engament par encliquetage;
ou
les éléments de retenue (16) comportent chacun un élément à ressort (10) de sorte que des éléments de support (8, 9) disposés sur une plaque de montage (1) peuvent être amenés en engagement par encliquetage avec les éléments de guidage (15).

8. Corps de toilettes selon l'une des revendications 2 ou 6 ou 7, **caractérisé en ce que** le corps en céramique (20) comporte sur son côté arrière (13) un bord en céramique (27) délimitant en périphérie la cavité (14), le bord en céramique (27) entourant une surface qui est supérieure à une plaque de montage (1) selon l'une quelconque des revendications 1 ou 4 à 6.

9. Corps de toilettes selon l'une des revendications 2 ou 6 à 8, **caractérisé en ce que** le dispositif de douche inférieure (30) comporte un récipient (32) muni d'une ouverture (33) ouverte en direction du côté supérieur (6) du corps de toilettes (2) de sorte que le récipient (32) peut être rempli d'eau par une amenée d'eau (22) disposée au niveau d'une plaque de montage (1).

10. Dispositif sanitaire comprenant une plaque de montage (1) selon l'une des revendications 1 ou 3 à 5 et un corps de toilettes (2) selon l'une des revendications 2 ou 6 à 9.

11. Kit comprenant une plaque de montage (1) selon l'une des revendications 1 ou 3 à 5 et un corps de toilettes (2) selon l'une des revendications 2 ou 6 à 9.

12. Procédé de montage d'un dispositif sanitaire comprenant une plaque de montage (1) selon la revendication 5 et un corps de toilettes (2) selon l'une des revendications 6 à 9, **caractérisé par** les étapes consistant à:
fixer une plaque de montage (1) sur une paroi de bâtiment;
relier l'interface électrique (21) et l'amenée d'eau (22) à des connecteurs correspondants côté bâtiment;
fixer le corps de toilettes (2) à la plaque de montage (1) par insertion des éléments de guidage (15) dans les premier et second éléments de support (8, 9) jusqu'à encliqueter les éléments à ressort (10) dans les éléments de retenue (16); et
monter un joint d'étanchéité (25) ou un matériau d'étanchéité dans un espace intermédiaire ménagé entre le corps en céramique (20) et une paroi de bâtiment.

13. Procédé d'enlèvement d'un corps de toilettes (2) d'un dispositif sanitaire comprenant une plaque de montage (1) selon la revendication 5 et un corps de toilettes (2) selon l'une des revendications 6 à 9 d'une plaque de montage (1) fixée à une paroi de bâtiment, **caractérisé par** les étapes consistant à:
faire tourner les éléments à ressort (10) au moyen d'un cordon ou d'un fil jusqu'à ce que les éléments de support (8, 9) ou les éléments de guidage (15) soit libérés ; et
retirer le corps de toilettes (2) de la plaque de montage (1).

14. Utilisation de la plaque de montage (1) selon l'une des revendications 1 ou 3 à 5 pour fixer un corps de toilettes (2) selon l'une des revendications 2 ou 6 à 9 sur une paroi de bâtiment.
